# EUROPEAN PATENT SPECIFICATION

(11) **EP 2 293 493 B1**
(45) Date of publication and mention of the grant of the patent: **22.02.2017**
(21) Application number: 09290683.3
(22) Date of filing: 08.09.2009
(51) Int. Cl.: H04L 12/18

(54) **Method of providing a multicast communication service**
Verfahren zur Bereitstellung eines Rundsendekommunikationsdienstes
Procédé pour la fourniture d'un service de communication en multidiffusion

(43) Date of publication of application: 09.03.2011
(73) Proprietor: ALCATEL LUCENT, 92100 Boulogne-Billancourt (FR)
(72) Inventor: Gebhard, Ulrich, 71634 Ludwigsburg (DE)
(74) Representative: Knecht, Ulrich Karl

(56) References cited:
- EP-A- 1 713 199
- EP-A- 1 713 200
- US-A1- 2006 262 792
- US-A1- 2008 095 160
- JUN-HONG CUI ET AL: "Aggregated Multicast - A Comparative Study" CLUSTER COMPUTING, KLUWER ACADEMIC PUBLISHERS, BO, vol. 8, no. 1, 1 January 2005 (2005-01-01), pages 15-26, XP019205396 ISSN: 1573-7543

## Description

The present invention relates to a method of providing a multicast communication service in a communication network. The present invention also relates to a corresponding communication network and a corresponding filtering bridge.

Nowadays, many traditional informational services of public interest, e.g. printed newspapers, radio broadcast services, television broadcast services, etc., have a corresponding service which is provided via communication networks. These services are multicast communication services which are provided by a source node to a plurality of distribution nodes. In the following the wording "service" may be synonymously used for "multicast communication service". Since the amount of data transmitted via the communication network, e.g. the Internet or a telecommunication network, has a rapidly increasing rate, it becomes more and more difficult to ensure a minimum amount of quality of service for such informational services of public interest transmitted via the communication network. Document US2008/0095160A1 discloses a subnet scoped multicast/ broadcast packet distribution mechanism over a routed network.

The object of the present invention is to provide an improved method of providing a multicast communication service, an improved communication network for providing a multicast communication service as well as an improved filtering bridge for providing a multicast communication service.

The present invention is achieved by a method according to claim 1. The object of the present invention is also achieved by a communication network for providing a multicast communication service, wherein the communication network comprises two or more regions, wherein each region comprises a set of one or more nodes, wherein each region of the two or more regions comprises a predefined universal distribution tree which connects and comprises one or more nodes selected from the set of one or more nodes, whereby the one or more nodes are configured to provide connections according to the universal distribution tree, and wherein the communication network comprises at least one filtering bridge configured for interconnecting the two or more universal distribution trees. The object of the present invention is further achieved by a filtering bridge for providing a multicast communication service in a communication network comprising two or more regions, each region comprises a predefined universal distribution tree which connects and comprises one or more nodes selected from a set of one or more nodes and configured to provide connections according to the universal distribution tree, wherein the filtering bridge comprises a control unit adapted to receive a data packet associated with a service from a node of the universal distribution tree of a first region, to send the data packet to one or more nodes of the universal distribution tree of a second region, if the service associated with the data packet is associated with the second region, and to drop the data packet, if the service associated with the data packet is not associated with the second region and is not associated with a tunnel to a further filtering bridge or a tunnel to a single distribution node.

The present invention provides a service independent infrastructure for multicast communication services by means of the method of providing the multicast communication service, the communication network, and/or the filtering bridge according to the present invention. Preferably, the communication network is a core and/or a edge network. The communication network can be accessed by means of one or more access networks, which can provide users and/or service providers access to the communication network. The multicast communication service can be provided via the one or more access networks. The universal distribution trees are, preferably generic, multicast routing paths which are independent of the multicast communication service. Preferably, each universal distribution tree comprises all nodes of the set of one or more nodes. It is also possible that all nodes of the communication network, when being a core and/or a edge network, are nodes of the universal distribution trees. In particular, it is possible that all nodes of the one or more nodes of each distribution tree are selected from the associated set of one or more nodes, possibly by an operator, such that each distribution tree comprises a minimum number of nodes, and/or 80% to 100% of the nodes of the associated set of one or more nodes. Thereby, it is possible that at least one or a plurality of multicast communication services can be routed through the communication network sharing the same universal distribution tree. The universal distribution tree can be generic and further possibly static, i.e. the universal distribution tree is predefined and does not alter with time, unless the network topology is changed. Therefore, it is possible that none of the one or more nodes of the universal distribution tree requires updating of multicast routing information unless the network topology is changed. Consequently, the stability of the communication network and the quality of service of the service or even more than one service is improved because of a reduced administrative communication overhead.

Furthermore, the distribution of the communication network, which is preferably a core network, in two or more regions reduces further the administrative communication overhead required for transmitting multicast communication services. Preferably, the distribution in two or more regions of the communication network is adapted to a geographical circumstances and/or characteristics, like frontiers of states and/or countries, population densities, etc., where the multicast communication services are provided. For instance, such embodiments of the present invention are advantageous if the multicast communication services comprise services such as regional television broadcast services and/or regional radio broadcast services. However, it is also possible that two or more regions are organized hierarchically, i.e. at a different level, or coequally, i.e. at a same level.

The filtering bridge can be a node of the set of the one or more nodes of a region of the two or more regions. It is also possible that the filtering bridge is a computer program product executed on a node of a universal distribution tree, wherein the node is located at a border of its associated region for interconnecting the universal distribution tree with another universal distribution tree of a neighboring region. Thereby, it is possible that the filtering bridge provides a gateway functionality with filtering, mapping and/or translating functionality. The filtering bridge can restrict the multicast routing of a service to a region, e.g. the filtering bridge drops silently incoming data packets which are data packets of a service not supported by the universal distribution tree of a region associated with the filtering bridge. The filtering bridge is associated with at least two regions of the two or more regions. It is also possible that the filtering bridge does silently not forward or not route outgoing data packets which are data packets of a service not supported by a universal distribution tree of a adjoined or neighboring region to the region associated with the filtering bridge. Data associated with a multicast communication service comprises at least one data packet or a plurality of data packets. In case that the data associated with a multicast communication service comprises only one data packet, the wording "data" may be synonymously used for the wording "data packet". The wording "dropping of a data packet", wherein the data packet is associated with a service, means that the data packet is discarded and/or that the data packet is removed from data associated with the service. The wording "silently" means that there is no notification on the action to any involved entity, like nodes, filtering brides, or distribution nodes. Furthermore, it is possible that the communication network comprise three, four or more regions.

Further advantages are achieved by embodiments of the invention indicated by the dependent claims.

According to a preferred embodiment of the invention, the at least one filtering bridge receives a data packet associated with a service from a node of a universal distribution tree of a first region. The at least one filtering bridge sends the data packet to one or more, preferably all, nodes of a universal distribution tree of a second region, if the service associated with the data packet is associated with the second region. The two or more regions comprise the first and the second region. The data packet is, preferably silently, dropped if the service associated with the data packet is not associated with the second region and is not associated with a tunnel to a further filtering bridge or a tunnel to a single distribution node. Thereby, it is possible to improve stability of the communication network due to a reduced network load on the communication network. As a consequence thereto a quality of service of the multicast communication service is improved.

According to a preferred embodiment of the invention the at least one filtering bridge provides a filter table. The filter table assigns one or more services to the first region and/or one or more services to the second region. Preferably, the filter table is held by a database associated with the at least one filtering bridge. The at least one filtering bridge accesses the filter table. The at least one filtering bridge determines whether the service associated with the received data packet is associated with the second region by means of the filter table.

Preferably, data is associated with at least two services of the one or more services. The data comprises at least one or a plurality of data packets. A filter table is provided to the at least one filtering bridge. The filter table assigns each of the at least two services to a first region and/or to a second region. The at least one filtering bridge receives data packets associated with one or more services via a universal distribution tree of the first region. The at least one filtering bridge removes or drops data packets from the data according to the filter table prior sending the data to one or more nodes associated with another region via the universal distribution tree associated with the second region. For instance, removing data according to the filter table by the filtering bridge may improve stability as well as quality of service of the communication network in a region of the two or more regions, where a service associated with the data is not provided. However, data associated with a service which is not provided in a specific region of the two or more regions may transit the specific region by a specific P2P (P2P = point to point) connection or tunnel to a remote filtering bridge of another region of the two or more regions or to a single, preferably remote, distribution node of the other region through the neighboring region. Thereby, it is possible to bypass the universal distribution tree of the specific region. In such a case, the at least one filtering bridge may not remove or drop the data or data packets associated with the service which is not provided in the specific region. This may in particular be desired, in case that a topology of the communication network comprises the two or more regions arranged such that each of the two or more regions comprise one or two neighboring regions of the two or more regions.

Preferably, an operator generates the filter table of the at least one filtering bridge. The operator provides the filter table to the at least one filtering bridge. The operator is a user or a computer program product executed on a network management control unit of the communication network for managing and configuring the set of one or more nodes of the respective region. The operator generates said filter table by means of a graphical user interface interfacing a network management control unit. Furthermore, the operator provides the generated filter table to the at least one filtering bridge by means of the graphical user interface.

According to a preferred embodiment of the invention the at least one filtering bridge receives a data packet via an in-port of the at least one filtering bridge.

The in-port of the at least one filtering bridge is assigned to exactly one out-port of a node of the universal distribution tree associated with a first region. The at least one filtering bridge sends the data packet to one or more nodes associated with another region via a universal distribution tree associated with a second region. For sending the data packet to the one or more nodes associated with the other region the data packet is sent via one or more out-ports of the at least one filtering bridge. Each of the one or more out-ports of the at least one filtering bridge is assigned to an in-port of one of the one or more nodes of the universal distribution tree associated with the second region.

It is possible, that a node and/or a filtering bridge of the communication network copies a via an in-port received data packet associated with a service to one or more out-ports of the node and/or the filtering bridge, respectively for sending the data packet to one or more other nodes and/or filtering bridges of the communication network. The number of the out-ports the received data packet can be copied to is only limited by the topology of the communication network and the topology of the universal distribution tree within the communication network and is typically in the range of 1 to 10.

Preferably, the at least one filtering bridge is assigned to at least two regions of the two or more regions. It is also possible that the at least one filtering bridge is assigned to all regions of the two or more regions. The universal distribution trees associated with the at least two regions comprise the at least one filtering bridge. In order to provide data associated with one or more services to a plurality of users by the distribution nodes, the at least one filtering bridge receives the data via an in-port of the filtering bridge. The distribution node is a node of the universal distribution trees. The in-port of the at least one filtering bridge is assigned to an out-port of one of the one or more nodes of a universal distribution tree associated with a first region of the two or more regions. The at least one filtering bridge sends the data associated with the one or more services to a node associated with another region via a universal distribution tree associated with a second region of the at least two regions. The at least one filtering bridge sends the data associated with the one or more services via an out-port of the at least one filtering bridge. As above, the out-port of the at least one filtering bridge is assigned to an in-port of one of the one or more nodes of the universal distribution tree associated with the second region.

It is possible, that a universal distribution tree comprises one or more distribution nodes. Preferably, each node of the universal distribution tree is a distribution node. A distribution node provides the data packet associated with a service to a plurality of users and/or interconnects with an access network which provides the data packet associated with the service to the plurality of users. A distribution node can be an end and/or an intermediate node of the universal distribution tree.

According to a preferred embodiment of the invention a source node receives a data packet associated with a service. The source node is one of the nodes of the universal distribution trees. It is possible, that the source node receives the data packet from a node of the communication network, wherein said node is associated with a multicast communication service provider. A distribution node provides the data packet associated with the service to a plurality of users. The distribution node is one of the nodes of the universal distribution trees.

According to a preferred embodiment of the invention each of one or more out-ports of a node of the selected one or more nodes is assigned to an in-port of another node of the sets of one or more nodes for configuring the nodes of a universal distribution tree. Each in-port of the one or more in-ports is assigned to one out-port.

Preferably, for each node of the selected one or more nodes one or more out-ports of a node are assigned one each to in-ports of other nodes of the sets of one or more nodes. Each in-port of the one or more in-ports is assigned to one out-port of another node. Furthermore, each node of each universal distribution tree copies, preferably all or each, via one of its in-ports received data or data packets associated with a service to one or more of its out-ports for sending the data or data packets. Preferably, each node comprises a control unit providing communication functionality and/or an TCP/IP stack (TCP = Transmission Control Protocol, IP = Internet Protocol). Furthermore, the in- and out-ports can be ports according to a TCP, UDP and/or SCTP (User Datagram protocol, SCTP = Stream Transmission Protocol) for receiving incoming data packets and/or sending outgoing data packets, respectively. In such a case, these in- and out-ports are logical entities. Thereby, the in- and out-ports can provide the functionality of a sub-address and/or a data packet label. It is also possible that the in- and out-ports are hardware means, i.e. physical entities, like plugs and/or sockets, of the control unit. It is further possible that the in- and out-ports are specific channels in a digital signal, e.g. SDH and/or OTH (SDH = Synchronous Digital Hierarchy, OTH = Optical Transport Hierarchy). It is further possible that the node acts like a branching out, since data associated with the service can be received by an in-port of the node and sent out to one or more in-ports of other nodes, which are subsequent to the node, via the universal distribution tree. These subsequent nodes may either be part of the universal distribution tree associated with the node or may be part of a universal distribution tree not associated with the node, but associated with a universal distribution tree of another region of the two or more regions. Due to the fact that the nodes can copy the received data, which is received by a, in particular specific, in-port, the node may not inspect the received data in order to send it off. The in-port by itself may indicate the service associated with the data. It is possible to identify the service according to its associated one or more in-ports. Thereby, the administrative work performed by the nodes of the universal distribution tree is minimized. Furthermore, it is possible that the at least one filtering bridge provides the functionality of a node of the communication network, preferably as described above. Thereby, the at least one filtering bridge can copy, preferably all or each, via an in-port of the at least one filtering bridge received data or data packets associated with a service to an out-port of the at least one filtering bridge for sending the data or data packets.

Preferably, each node of each universal distribution tree disregards possibly assigned address information of the data associated with a service while copying the via its in-port received data associated with the service to one or more out-ports for sending the data.

According to a preferred embodiment of the invention two or more out-ports of the node is assigned to respective in-ports of the other node. Thereby, it is possible to increase available bandwidth associated with the one or more services, e.g. for improving quality of service of the one or more services.

According to a possible embodiment of the invention two or more out-ports of a node are or can be connected to an equal number of in-ports of another node and can be bundled into a logical port such that they appear as a single port to the transmitting and receiving entities in the two nodes.

According to a preferred embodiment of the invention a source node labels a data packet with a label indicating that the data packet is associated with a service. The source node can be one of the nodes of the universal distribution trees or it can be a node of an access network connected to one of the distribution nodes.

Preferably, data is associated with at least two services of the one or more services. The data comprises at least two data packets assigned respectively to one service of the at least two services by labeling each data packet respectively to its assigned service. It is possible that the for labeling each data packet a MPLS method (MPLS = Multiprotocol Label Switching) is used.

Thereby a, preferably distant or isolated, universal distribution tree or a node of the sets of one or more nodes can be connected across a region of the two or more regions to another universal distribution tree or node of the sets of one or more nodes by means of an MPLS tunnel, an Ethernet P2P bridge or a leased line.

According to a preferred embodiment of the invention the at least one filtering bridge receives a data packet with the label from a node of a universal distribution tree of a first region. The at least one filtering bridge determines whether the service associated with the received data packet is associated with a second region by means of the label. The at least one filtering bridge sends the data packet to one or more nodes of a universal distribution tree of the second region, if the service associated with the data packet is associated with the second region. The at least one filtering bridge drops, preferably silently, the data packet, if the service associated with the data packet is not associated with the second region and is not associated with a tunnel to a remote filtering bridge or a remote distribution node. It is possible that the remote distribution node is isolated.

According to a preferred embodiment of the invention a distribution node removes from the data packet the label indicating that the data packet is associated with the service. The distribution node is one of the nodes of the universal distribution trees.

Preferably, the nodes of the sets of one or more nodes are allocated to regions by an operator. The operator can define groups associated with one or more services, wherein the groups are associated with one of the two or more regions. The operator further defines the scope of the groups, which can be performed by mapping groups to regions.

According to a preferred embodiment of the invention the communication network comprises a network management control unit associated with at least one region of the two or more regions. The network management control unit is adapted to provide access by means of a graphical user interface, to configure and to manage the set of one or more nodes and/or to define the at least one predefined universal distribution tree.

Preferably, for each region an operator defines the universal distribution tree by selecting from the set of one or more nodes associated with the region the one or more nodes of the universal distribution tree of the respective region. Further, the operator assigns each of one or more out-ports of the selected one or more nodes to an in-port of another node of the sets of one or more nodes associated with the two or more regions. Preferably, the operator is a user or computer program product executed on a network management control unit of the communication network for managing and configuring the set of one or more nodes of the respective region. In case the operator is a user, the operator defines said universal distribution tree and assigns each of the one or more out-ports of the selected one or more nodes to the in-port of the other node by means of a graphical user interface interfacing the network management control unit of the communication network for managing and configuring the set of one or more nodes of the respective region. It is further possible that the network management control unit of the communication network is assigned to each region of the two or more regions and/or that each region of the two or more regions is provided with one network management control unit.

A preferred embodiment of the present invention is described very detailed as follows: In order to provide data associated with a service to a plurality of users by one or more distribution nodes, a source node associated with a region of the two or more regions sends data associated with the service via its associated universal distribution tree to one or more nodes of the one or more nodes of the universal distribution tree associated with the source node. The one or more nodes of the universal distribution tree associated with the source node receive the data associated with the service each via an in-port. One or more nodes among the one or more nodes of the universal distribution tree associated with the source node are border nodes attached to another region of the two or more regions. The one or more border nodes send the data associated with the service via one or more out-ports to one or more nodes of the one or more nodes of the universal distribution tree associated with their attached region via the universal distribution tree associated with the attached region. The data associated with the service are sent via one or more out-ports of the one or more border nodes. Only one border node per any two neighboring regions is active at any one time and forwards data from one region to the other to avoid data multiplication.. The one or more nodes of the universal distribution tree associated with the other region receive the data associated with the service each via an in-port. The one or more nodes of the universal distribution tree associated with the other region send the data associated with the service to the one or more distribution nodes associated with the other region via the universal distribution tree associated with the other region. The data associated with the service are sent via one or more out-ports of the one or more nodes of the universal distribution tree associated with the other region.

Preferably, a border node, which is a node of the one or more nodes of the universal distribution tree associated with the source node, sends the data associated with the service to a node of the one or more nodes of a universal distribution tree associated with the other region via the at least one filtering bridge for interconnecting the two or more regions and/or the two or more universal distribution trees. It is possible, that the source node and the distribution node are associated with the same region and, thereby, with the same universal distribution tree.

It is possible that, each universal distribution tree is protected by means of a stand-by path and/or a stand-by universal distribution tree in order to provide carrier-grade recovery. Furthermore, also the at least one filtering bridge may have redundant one or more back-up devices and/or one or more filtering bridges. Preferably, there is a further filtering bridge for interconnecting the two or more regions, such that the at least one filtering bridge may be active and the further filtering bridge may be in a stand-by mode.

These as well as further features and advantages of the invention will be better appreciated by reading the following detailed description of presently preferred exemplary embodiments taken with the accompanying drawings of:

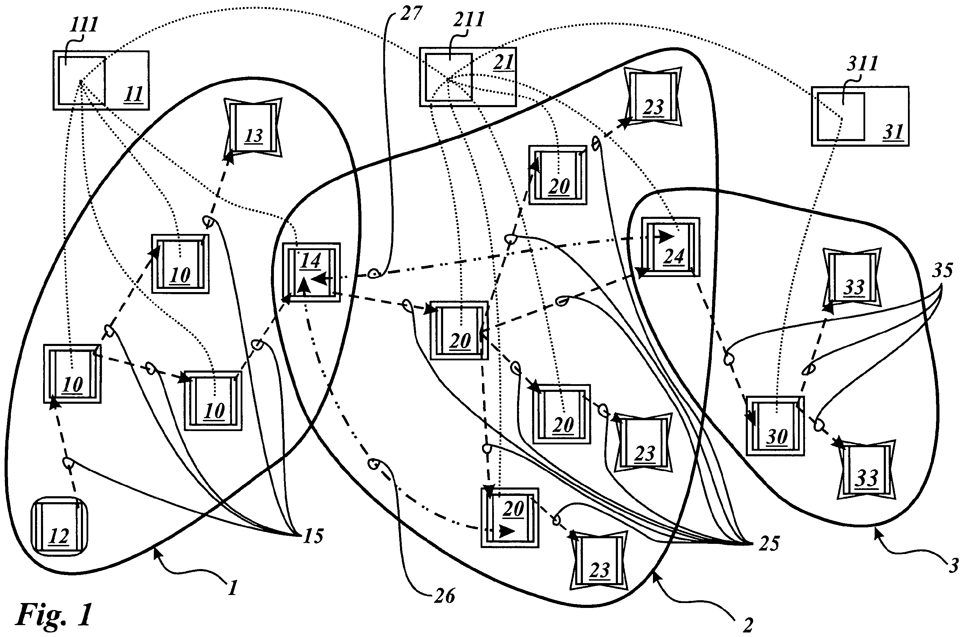

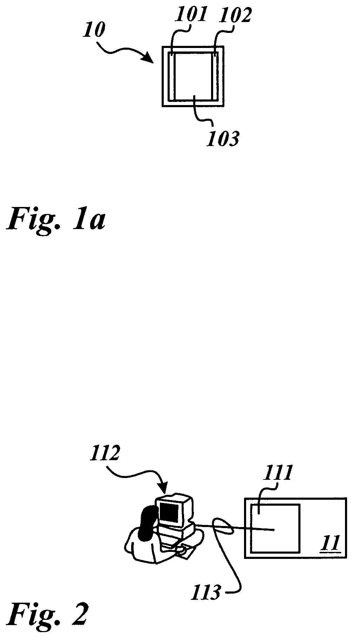

- Figure 1: shows a schematic diagram of a communication network providing a multicast communication service.
- Figure 1 a: shows a node of the communication network of Figure 1.
- Figure 2: shows a schematic diagram of an operator interacting with a network management control unit of the communication network for managing and configuring a set of one or more nodes of a region of the communication network by means of a graphical user interface interfacing a network management control unit.
- Figure 3: shows an exemplary partial section of a universal distribution tree.

Figure 1 shows a schematic diagram of a communication network providing a multicast communication service. The communication network, which is preferably a core network, is distributed in three regions 1, 2, and 3. However, it is also possible that the communication network comprises four or more regions.

A first region 1 of these regions 1, 2, 3 comprises a source node 12, three nodes 10 and a distribution node 13. A second region 2 of these three regions 1, 2, 3 comprises four nodes 20 and three distribution nodes 23. A third region 3 of these three regions 1, 2, 3 comprises a node 30 and two distribution nodes 33. Furthermore, the communication network comprises two filtering bridges 14 and 24. A first filtering bridge 14 of these two filtering bridges 14, 24 is associated with the first region 1 and with the second region 2. A second filtering bridge 24 of these two filtering bridges 14, 24 is associated with the second region 2 and with the third region 3. Figure 1 shows a simple variant of the communication network of the present invention, it is possible that communication network comprises more than three regions, wherein the regions can comprise one or more source nodes, one or more distribution nodes, a plurality of nodes, and/or one or more universal distribution trees. The communication network comprises three network management control nodes 11, 21 and 31. A first network management control node 11 of the three network management control nodes 11, 21, 31 is associated with the first region 1 and comprises a network management control unit 111. A second network management control node 21 of the three network management control nodes 11, 21, 31 is associated with the second region 2 and comprises a network management control unit 211. A third network management control node 31 of the three network management control nodes 11, 21, 31 is associated with the third region 3 and comprises a network management control unit 311. Thereby, it is possible to place the three network management control nodes 11, 21, 31 in a hierarchical structure. However, it is also possible that instead of the three network management control nodes a central network management control node having a network management control unit is provided, preferably with a stand-by network management control node. The central network management control node can have access terminals associated with the regions for controlling the nodes of the universal distribution trees and/or parts and/or entities of the communication network of the regions by means of credentials.

The source node 12, the nodes 10, 20, 30, the distribution nodes 13, 23, 33 and the filtering bridges 14, 24 comprise a control unit. The control units of the source node 12, the nodes 10, 20, 30, the distribution nodes 13, 23, 33 and the filtering bridges 14, 24, and the network management control units provide communication functionality, a TCP/IP stack and in- and out-ports according to a TCP enabling communication via a packet based telecommunication network. The communication network is a packet based telecommunication network. The in- and out-ports are logical entities used for receiving incoming data packets and/or sending outgoing data packets, respectively. Thereby, the in- and/or out-ports provide the functionality of a data packet label associated with a service of at least one multicast communication service.

Figure 1 a shows exemplarily the node 10 of the communication network of figure 1. The node 10 comprises a control unit 103 having in-ports 101 and out-ports 102. The node 10 stands exemplarily for the source node 12, the nodes 10, 20, 30, and the distribution nodes 13, 23, 33 and the filtering bridges 14, 24. Throughout the figures 1 to 4 control units of the source node, the nodes, the distribution nodes and the filtering bridges have in- and out-ports which are in general not referenced by reference numerals, however the control units symbolized as squares have at the left hand side border a small stripe symbolizing their in-ports and have at the right hand side border a small stripe symbolizing their out-ports.

By means of an exemplary application of the present invention, the invention will be described in more detail as follows:

A typical multicast communication service is for instance a service of public interest, like television broadcast service, IPTV (Internet Protocol Television), radio broadcast service, emergency notification service, news service, which are provided via the communication network to a plurality of users. As a typical example of such service, a television broadcast service will serve as example for describing a presently preferred embodiment of the invention.

For instance, a television broadcast provider - as multicast communication service provider -provides four TV programs (TV = Television) TV.global, TV.regional1, TV.regional2 and TV.regional3 as four multicast communication services. The TV program TV.global shall be provided in all three regions 1, 2, 3. The TV program TV.regional1 shall be provided in the first region 1 and in the third region 3. The TV program TV.regional2 shall be provided in the first region 1 and in the second region 2. The TV program TV.regional3 shall be provided in the first region 1 and in the third region 3. In order to provide the four TV programs the television broadcast provider may have a subscription to a provider of the communication network. The provider of the communication network maintains the communication network. Furthermore, the provider of the communication network provides the multicast communication service to the distribution nodes 13, 23, and 23, whereas the television broadcast provider does only provide the multicast communication services to the source node 12. However, it is also possible that the communication network provider is the multicast communication service provider. The distribution nodes 13, 23, and 33 provide the multicast communication services, in the present case to a plurality of users.

In order to provide the multicast communication services, bandwidth may be allocated for each multicast communication service by means of the network management control nodes 11, 21, 31. However, it is also possible that instead of the three network management control nodes a central network management control node having a network management control unit is provided as previously described. It is possible that the provider of the communication network or the operator allocates the bandwidth to the universal distribution trees 15, 25, and/or 35 based on estimation of required bandwidth for providing the multicast communication services or based on a contract between the multicast communication service provider and the provider of the communication network.

In figure 1 user nodes associated with the plurality of users are not shown. In order to provide each user of the plurality of users with a multicast communication service, the users of the plurality of users have a subscription to the multicast communication services. The users of the plurality are associated to the first region 1, the second region 2 or the third region 3. The users associated with the first region 1 register at the distribution node 13 by means of their user nodes which enables receiving of the four TV programs TV.global, TV.regional1, TV.regional2 and TV.regional3 provided by the distribution node 13. The users associated with the second region 2 register at one or more of the three distribution nodes 23 by means of their user nodes which enables receiving of the two TV programs TV.global and TV.regional2 provided by the one or more of the three distribution nodes 23. The users associated with the third region 3 register at one or more of the two distribution nodes 33 by means of their user node which enables receiving of the three TV programs TV.global, TV.regional1 and TV.regional3 provided by the one or more of the two distribution nodes 33. Thereby, stability as well as quality of service of the multicast communication services of the communication network is improved, since the distribution nodes 13, 23, 33 provide registration and/or subscription functionality to the plurality of users in place of the source node 12 and/or the television broadcast provider, i.e. the multicast communication service provider. Data packets associated with the registration and/or the subscription of the plurality of users may not be transferred via the communication network and thereby reducing a load on the communication network.

However, prior providing of the multicast communication services, three universal distribution trees 15, 25, and 35 are defined by an operator of the communication network. The operator defines a first universal distribution tree 15 of the three universal distribution trees 15, 25, and 35, which is associated with the first region 1. The operator defines a second universal distribution tree 25 of the three universal distribution trees 15, 25, and 35, which is associated with the second region 2. The operator defines a third universal distribution tree 35 of the three universal distribution trees 15, 25, and 35, which is associated with the third region 3. In the present exemplary embodiment each region 1, 2, 3, is provided with an operator for administrating, managing and/or configuring the source node 12, nodes 10, 20, 30, the distribution nodes 13, 23, 33 and the universal distribution tree of its region 1, 2, and 3, respectively by means of the respective network management control node of the network management control nodes 11, 21, and 31. The first filtering bridge 14 and the second filtering bridge 24 can be administrated, managed and/or configured by means of the second network management control node 21. In figure 1, dotted lines indicated network communication connections between the source node 12, nodes 10, 20, 30, the distribution nodes 13, 23, 33, the filtering bridges 14, 24 and the network management control nodes 11, 21, and 31 used for administrating, managing and/or configuring the source node 12, nodes 10, 20, 30, the distribution nodes 13, 23, 33 and the filtering bridges 14, 24. Preferably, the three universal distribution trees 15, 25, and 35 are only defined once. Thereby, the three universal distribution trees 15, 25, and 35 provide a static network topology for providing multicast communication services. However, the operator associated with one of the regions 1, 2, and/or 3 may dynamically adapt the bandwidth available to a multicast communication service provided by his associated universal distribution tree by means of the network management control node, for instance by assigning further in- and further out- ports to a service of the multicast communication services. Thereby, the topology of the universal distribution tree is not altered, but quality of service of the service is improved. Furthermore, since the universal distribution trees 15, 25, and 35 are defined by means of the network communication control node 11,21, and 31, respectively, it is still possible to redefine the universal distribution trees 15, 25, and 35 by means of the network communication control node 11, 21, and 31, respectively.

Figure 2 shows exemplarily a schematic diagram of the operator interacting with the network management control node 11 of the communication network for managing and configuring a set of one or more nodes of the first region 1 of the communication network by means of a graphical user interface 112 interfacing 113 the network management control unit 111. For instance, the graphical user interface 112 can be a web interface provided by a web-server of the network management control node 11 to the operator via the communication network. The graphical user interface 112 can also be a computer comprising a display, a keyboard, a mouse device, a network communication interface providing an TCP/IP stack, a central processing unit, a hard disk and/or a random access memory, wherein the computer provides the functionality of interfacing with the network management control unit 111 and can further comprise a data base functionality for holding data about the communication network, the nodes 10, 20, 30, the filtering bridges 14, 24, the source node 12, the distribution nodes 13, 23, 33 and/or the multicast communication services.

Further towards the definition of the universal distribution trees 15, 25, 35: The universal distribution trees 15, 25, 35 are indicated by dashed arrows. The dashed arrows in figure 1 point with their head to an in-port, wherein the arrow starts with its end at an out-port symbolizing the multicast routing of the multicast communication service. The operator associated with the first region 1 selects from a predefined set of one or more nodes 10 associated with the first region 1 the three nodes 10 by means of the network management control node 11. The operator defines the universal distribution tree 15 as indicated in figure 1 by the arrows 15 such that data packets associated with the four TV programs TV.global, TV.regional1, TV.regional2 and TV.regional3 can be send-off via an out-port of the source node 12 to an in-port of one of the nodes 10, the one node can copy the via its in-port received data to one of its out-ports for sending the data packets to further nodes of the nodes 10, etc., and such that the data packets can arrive at the an in-port of the distribution node 13 and at an in-port of the filtering bridge 14. The operator associated with the second region 2 selects from a predefined set of one or more nodes 20 associated with the second region 2 the four nodes 20 by means of the network management control node 21. The operator associated with the second region 2 defines the universal distribution tree 25 as indicated in figure 1 by the arrows 25 such that data packets associated with the four TV programs TV.global, TV.regional1, TV.regional2 and TV.regional3 can be send-off via an out-port of the filtering bridge 14 to an in-port of one of the nodes 20, the one node can also copy the via its in-port received data to one of its out-ports for sending the data packets to three further nodes of the nodes 20 and to the filtering bridge 24, etc., and such that the data packets can arrive at an in-port of the three distribution nodes 23 and at an in-port of the filtering bridge 24. The operator associated with the third region 3 selects from a predefined set of one or more nodes 30 associated with the third region 3 the node 30 by means of the network management control node 31. The operator associated with the third region 3 defines the universal distribution tree 35 as indicated in figure 1 by the arrows 35 such that data packets associated with the three TV programs TV.global, TV.regional1 and TV.regional3 can be send-off via an out-port of the filtering bridge 24 to an in-port of the node 30, the node 30 can copy the via its in-port received data to one of its out-ports for sending the data packets to the two distribution nodes 33, which can receive the data packets at one of their in-ports.

The operator associated with the second region 2 configures the filtering bridges 14 and 24 for interconnecting the first region 1 and the second region 2 and the second region 2 and the third region 3, respectively by means of the network managing control node 21. The operator associated with the second region 2 accesses the network managing control node 21 by means of a graphical user interface interfacing with network managing control unit 211 of the network managing control node 21. The operator associated with the second region 2 provides a first filter table to the first filtering bridge 14 and a second filter table to second filtering bridge 24. The filter table of the first filtering bridge 14 enables that the first filtering bridge 14 provides the same functionality as any other node of the distribution trees 15, 25 or 35. The filter table entries of the first filtering bridge 14 point to entries in a forwarding table of the bridge one of which defines e.g. a MPLS tunnel, IP tunnel, or a direct line, like a SDH cannel, 27 for the TV program TV.regional3 such that data packets associated with the TV program TV.regional3 received at the filtering bridge 14 are forwarded to the second filtering bridge 24. The second region 2 is a transit region for the multicast communication service TV program TV.regional3. Furthermore, by means of a further e.g. MPLS tunnel, IP tunnel, or a direct line, like a SDH channel, 26 defined in the filter and forwarding table at the first filtering bridge 14 a, preferably distant, node 20 can be supported with a multicast communication service at an improved bandwidth and/or an improved quality of service. The MPLS tunnels 26 and 27 are indicated by double dashed-double-dotted arrows in figure 1. The filter table of the second filtering bridge 24 enables that the second filtering bridge 24 provides the same functionality as any other node of the distribution trees 15, 25 or 35. The filter and forwarding table of the second filtering bridge 24 defines a MPLS tunnel 27 for the TV program TV.regional3 such that data packets associated with the TV program TV.regional3 can be received from the filtering bridge 14 at the second filtering bridge 24. Furthermore, the filter table of the second filtering bridge is defined such that any incoming data packet associated with the TV program TV.regional2 is silently dropped, i.e. such data packets will not be forwarded or send to any other node or entity of the communication network.

In the following the further preferred features of the present invention are briefly described and essential features of the present invention are summarized:

The communication network provides a native multicast communication service using pre-established regional distribution trees which are universal distribution trees 15, 25, 35. Regional distribution trees 15, 25, 35 can be coupled by filtering devices, i.e. filtering bridges 14, 24, residing at a common border of neighboring regions or at an entrance of P2P transit tunnels or a digital line.

The communication network is divided into areas, i.e. regions, sharing a common criteria, e.g. a geographical region, an address prefix and/or some other attribute. It is also possible that for each region 1, 2, 3 an optimized universal distribution tree 15, 25, 35 is calculated by the network management control nodes. At an initialization of the communication network or upon a respective operator request, the network management control nodes 11, 21, 31 calculate the optimized universal distribution trees 15, 25, 35 for their associated regions 1, 2, 3. Preferably, an optimized universal distribution tree 15, 25, 35 provides a minimum transit time of data packages associated with the one or more services to transit the universal distribution tree 15, 25, 35. Thereby, the optimized universal distribution tree 15, 25, 35 can be similar to a bus. In order to determine transit times of data packages associated with the services to transit the universal distribution tree 15, 25, 35, i.e. the region associated with the universal distribution tree 15, 25, 35, the one or more network management control nodes 11, 21, 31 may query source nodes, distribution nodes and/or filtering bridges of their associated regions for providing a time information about data packets associated with the services, which comprises preferably a time related to a reception and/or sending-off of the data packets.

Furthermore, it is also possible to use a measure of distance, i.e. a tradeoff between a number of hops and a transit time, for optimizing the universal distribution tree 15, 25, 35. The number of hops equals the number of nodes which a data packet requires to pass for transiting a region. Thereby, an optimized universal distribution tree may provide a distance which is as short as possible.

It is further possible to associate each multicast communication service with a group for each region. Thereby, filtering tables of the filtering bridges can be efficiently administered. For example, the four TV programs TV.global, TV.regional1, TV.regional2 and TV.regional3 are associated with the regions and groups as follows: The TV program TV.global is associated with a group G1 of region 1, a group G1 of region 2, and a group G1 of region 3. The TV program TV.regional1 is associated with a group G2 of region 1, a group G3 of region 2, and a group G2 of region 3. The TV program TV.regional2 is associated with a group G3 of region 1 and a group G2 of region 2. There is no group of region 3 which is associated with the TV program TV.regional2. The TV program TV.regional3 is associated with a group G4 of region 1, a group G4 of region 2, and a group G3 of region 3. In the present embodiment the first filtering node 14 provides the following filter table: The group G1 of region 1 corresponds to group G1 of region 2, the group G2 of region 1 corresponds to group G3 of region 2, the group G3 of region 1 corresponds to group G2 of region 2, and the group G4 of region 1 corresponds to group G4 of region 2. The following table 1 shows the relations between the TV programs, the regions and the groups:

**Table 1**

| Region/TV program | region 1 | region 2 | region 3 |
|---|---|---|---|
| TV.global | G1 | G1 | G1 |
| TV.regional1 | G2 | G3 | G2 |
| TV.regional2 | G3 | G2 | |
| TV.regional3 | G4 | G4 | G3 |

The second filtering node 24 provides the following filter table: The group G1 of region 2 corresponds to group G1 of region 3, the group G2 of region 2 corresponds to no group of region 3, the group G3 of region 2 corresponds to group G4 of region 3, and the group G4 of region 2 corresponds to group G3 of region 3. The filtering nodes 14 and 24 can map incoming at the filtering node 14 and 24, respectively data packets to outgoing data packets, wherein the data packets are associated with the one or more services. However, the filtering node 24 will silently drop all incoming data packets associated with the group G2 of region 2, the filtering table does not provide a respective group of region 3 associated with the TV program TV.regional2. The filter tables of the first and second filtering bridge are shown in table 2:

**Table 2**

| Filter table of the first filtering bridge | | Filter table of the second filtering bridge | |
|---|---|---|---|
| region 1 | region 2 | region 2 | region 3 |
| G1 | G1 | G1 | G1 |
| G2 | G3 | G2 | |
| G3 | G2 | G3 | G2 |
| G4 | G4 | G4 | G3 |

Therefore, the use of filtering tables at filtering bridges avoids that the communication network is flooded unnecessarily with the data packets associated with the one or more services. Thereby, it is possible to improve the stability of the network and provide an improved quality of service of the multicast communication services. However, filtering bridges still allow the sharing of common and/or same multicast communication services. The filtering bridges 14 and 24, introduced at borders of the regions 1, 2, 3 which interconnect the universal distribution trees 15, 25, 35, can block some groups and let others groups pass accordingly to their filtering tables.

Regarding accessing the universal distribution trees 15, 25, 35, it is possible to use one or more of the following technologies: One or more of the universal distribution trees 15, 25, 35 can be accessed as a leased line service via a particular SDH channel, via a particular MPLS label, via a particular Ethernet multicast address, and/or via well-known Ethernet multicast address or via a particular IP multicast address. Preferably, these technologies share the same universal distribution tree, either in separate channels or sharing a common channel, separate from singlecast traffic or sharing the channel with singlecast traffic depending on the operator's strategy.

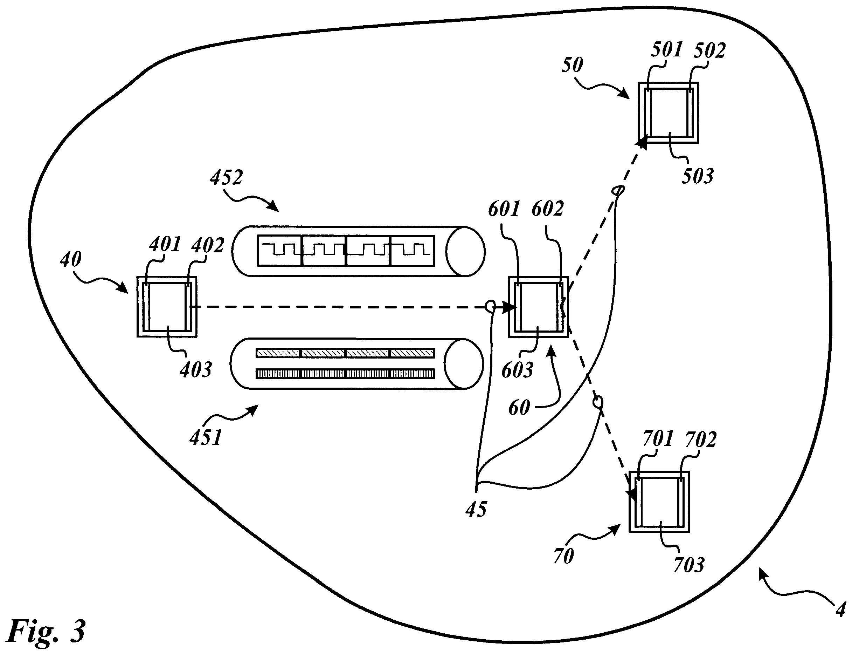

Figure 3 shows an exemplary partial section of a universal distribution tree 45. In more detail, figure 3 shows four nodes 40, 50, 60 and 70 interconnected by the universal distribution tree 45 of a region 4 of a communication network. The nodes 40, 50, 60 and 70 comprise control units 403, 503, 603 and 703, respectively. The control units 403, 503, 603 and 703 comprise one or more in-ports 401, 501, 601 and 701, respectively. The control units 403, 503, 603 and 703 comprise one or more out-ports 402, 502, 602 and 702, respectively. The node 60 provides a branching out of the universal distribution tree 45, i.e. one of its one or more out-ports 602 is configured to route data packets of one or more service to an in-port of the one or more in-ports 501 of the node 50 and to an in-port of the one or more in-ports 701 of the node 70. The universal distribution tree 45 is in figure 3 symbolized by means of dashed arrows which directions corresponds to the direction of the multicast routing of data packets associated with the one or more services provided by the universal distribution tree 45. Bandwidth pipes 451 and 452 are used for different technologies sharing the same universal distribution tree 45. Physical bandwidth can be allocated along the universal distribution tree 45 as required by using for example LCAS (LCAS = Link Capacity Adjustment Scheme). It is possible that packet based services and leased line services share the same allocated bandwidth pipe or travel in separated bandwidth pipes. Multicast traffic can share the same bandwidth resource with unicast and/or singlecast traffic if bandwidth requirements of the different services are satisfied. In figure 3, for instance, the bandwidth pipe 451 provides Ethernet/MPLS via Ethernet and Multicast MPLS via Point-to-Point based services, and the bandwidth pipe 452 provides a number of virtual containers for isochronous services.

It is further possible to provide inter-working with existing techniques, e.g. PIM (PIM = Protocol Independent Multicast), which can be achieved by configuring every node of the universal distribution tree as a Rendezvous Point of the PIM for further attached access networks. Then access network members can register with the node of the universal distribution tree and the node can forward the desired multicast traffic to the access network.

Summarizing, the present invention provides, in particular, for public, widely used services, e.g. IPTV (Internet Protocol Television), a better support by the communication network, because of the communication network provides a built-in ready-to-use multicast transport service pre-established by the communication network. Prior, communication network users had to establish multicast transport paths themselves by means of signalling.

Furthermore, an improved carrier grade multicast transport is provided. That means that recovery time of a multicast tree, i.e. the universal distribution tree, in case of failure (in the core and/or edge network) is approximately 50ms compared to seconds in the existing multicast solutions, like PIM. For instance, PIM is signalled on an IP layer and must then be translated into MPLS labels. However, the present invention provides that a, preferably well-known, label can be immediately available.

Furthermore, for customers which can be any core/edge network service user, the present invention provides the following: Customers may not care about how to reach the other members of a common group associated with the customers, because the communication network provides a respective interconnection of the customers of their common group by means of the universal distribution trees. Nodes, which correspond to routers, of the communication network may not maintain large multicast tables and/or routing tables which saves significantly an amount of routing information processing.

Existing multicast solutions require a permanent refresh of the their distribution tree, which is avoided by means of using the universal distribution trees. Since the universal distribution trees are predefined, customers can start sending immediately and thereby they can receive at the distribution nodes data packets associated with the multicast communication service much faster than with tradition multicast methods or solutions, like PIM. Furthermore, multicast communication service network traffic of the existing solution is doubled while a sender registers with a Rendezvous Point, communication network links must be dimensioned for this traffic. In the existing solution multicast traffic first always has to pass through the Rendezvous Point which can not always be the optimized distribution tree. Only later, a shorter path can be established using additional signalling. However, embodiments according to the present invention can always use an optimized tree, which is the universal distribution tree. Furthermore, embodiments according to the present invention provide that a multicast routing path, by means of the predefined universal distribution tree is always known and thereby it is possible to easily monitor and dimension, i.e. by adapting an allocated bandwidth to the universal distribution tree, the universal distribution tree to provide a reliable quality of multicast communication service, which is not possible with existing methods, like PIM, which provide an unpredictable multicast routing path. In such a case the multicast routing path can easily get congested.

## Claims

1. Method of providing a multicast communication service in a communication network, which is a core network, comprising two or more regions (1, 2, 3, 4), each region (1, 2, 3, 4) comprising a set of one or more nodes (10, 20, 30, 40, 50, 60, 70),
wherein the method comprises the steps of:
defining for each region (1, 2, 3, 4) of the two or more regions (1, 2, 3, 4) a universal distribution tree (15, 25, 35, 45), which is static, each universal distribution tree (15, 25, 35, 45) connecting and comprising one or more nodes (10, 20, 30, 40, 50, 60, 70) selected from the set of one or more nodes (10, 20, 30, 40, 50, 60, 70) associated with its region (1, 2, 3, 4),
configuring for each universal distribution tree (15, 25, 35, 45) the selected one or more nodes (10, 20, 30, 40, 50, 60, 70) to provide connections according to the respective universal distribution tree, and
configuring at least one filtering bridge (14, 24) for interconnecting the two or more universal distribution trees (15, 25, 35, 45).

2. Method of providing a multicast communication service in a communication network according to claim 1,
wherein the method comprises the further steps of:
receiving, by the at least one filtering bridge (14), a data packet associated with a service from a node of a universal distribution tree (15) of a first region (1),
sending, by the at least one filtering bridge (14), the data packet to one or more nodes of a universal distribution tree (25) of a second region (2), if the service associated with the data packet is associated with the second region (2), and
dropping the data packet, if the service associated with the data packet is not associated with the second region (2) and is not associated with a tunnel to a further filtering bridge or a tunnel to a single distribution node.

3. Method of providing a multicast communication service in a communication network according to claim 2,
wherein the method comprises the steps of:
providing a filter table to the at least one filtering bridge (14), the filter table assigning one or more services to the first region (1) and/or one or more services to the second region (2),
accessing, by the at least one filtering bridge (14), the filter table, and
determining by means of the filter table whether the service associated with the received data packet is associated with the second region (2).

4. Method of providing a multicast communication service in a communication network according to claim 1,
wherein the method comprises the further steps of:
receiving a data packet via an in-port of the at least one filtering bridge (14), the in-port of the at least one filtering bridge (14) being assigned to exactly one out-port of a node of the universal distribution tree (15) associated with a first region (1), and
sending the data packet to one or more nodes (30) associated with another region (3) via a universal distribution tree (25) associated with a second region (2), whereby the data packet is sent via one or more out-ports of the filtering bridge (14), each of the one or more out-ports of the filtering bridge (14) being assigned to an in-port of one of the one or more nodes of the universal distribution tree (25) associated with the second region (2).

5. Method of providing a multicast communication service in a communication network according to claim 1,
wherein the method comprises the steps of:
receiving, by a source node (12) which is one of the nodes of the universal distribution trees, a data packet associated with a service, and
providing, by a distribution node (33) which is one of the nodes of the universal distribution trees, the data packet associated with the service to a plurality of users.

6. Method of providing a multicast communication service in a communication network according to claim 1,
wherein the step of configuring the nodes (10, 20, 30, 40, 50, 60, 70) of a universal distribution tree (45) comprises the step of:
assigning each of one or more out-ports (602) of a node (60) of the selected one or more nodes (10, 20, 30, 40, 50, 60, 70) to an in-port (501, 701) of another node (50, 70) of the sets of one or more nodes (10, 20, 30, 40, 50, 60, 70), wherein each in-port of the one or more in-ports (501, 701) is assigned to one out-port (602).

7. Method of multicasting data according to claim 6,
wherein the step of configuring the nodes (10, 20, 30, 40, 50, 60, 70) of a universal distribution tree (45) comprises the further step of:
assigning two or more out-ports of the node (60) to respective in-ports (501, 701) of the other node.

8. Method of providing a multicast communication service in a communication network according to claim 1,
the method comprises the step of:
labeling, by a source node (12) which is one of the nodes of the universal distribution trees, a data packet with a label indicating that the data packet is associated with a service.

9. Method of providing a multicast communication service in a communication network according to claim 8,
the method comprises the step of:
receiving, by the at least one filtering bridge (14), the data packet with the label from a node of a universal distribution tree (15) of a first region (1),
determining by means of the label whether the service associated with the received data packet is associated with a second region (2),
sending, by the at least one filtering bridge (14), the data packet to one or more nodes of a universal distribution tree (25) of the second region (2), if the service associated with the data packet is associated with the second region (2), and
dropping the data packet, if the service associated with the data packet is not associated with the second region (2) and is not associated with a tunnel to a remote filtering bridge or a remote distribution node.

10. Method of providing a multicast communication service in a communication network according to claim 8,
the method comprises the step of:
removing, by a distribution node (33) which is one of the nodes of the universal distribution trees, from the data packet the label indicating that the data packet is associated with the service.

11. A communication network for providing a multicast communication service, wherein the communication network, which is a core network, comprises two or more regions (1, 2, 3, 4), wherein each region (1, 2, 3, 4) comprises a set of one or more nodes (10, 20, 30, 40, 50, 60, 70), wherein each region (1, 2, 3, 4) of the two or more regions (1, 2, 3, 4) comprises a predefined universal distribution tree (15, 25, 35, 45) which is static which connects and comprises one or more nodes (10, 20, 30, 40, 50, 60, 70) selected from the set of one or more nodes (10, 20, 30, 40, 50, 60, 70), whereby the one or more nodes (10, 20, 30, 40, 50, 60, 70) are configured to provide connections according to the universal distribution tree, and wherein the communication network comprises at least one filtering bridge (14, 24) configured for interconnecting the two or more universal distribution trees (15, 25, 35, 45).

12. The communication network according to claim 11,
wherein the communication network comprises a network management control unit (11) associated with at least one region of the two or more regions (1, 2, 3, 4), and wherein the network management control unit (11) is adapted to provide access by means of a graphical user interface (112), to configure and to manage the set of one or more nodes (10, 20, 30, 40, 50, 60, 70) and/or to define the at least one predefined universal distribution tree (15, 25, 35, 45).

13. Filtering bridge (14) for providing a multicast communication service in a communication network, which is a core network, comprising two or more regions (1, 2, 3, 4), each region (1, 2, 3, 4) comprises a predefined universal distribution tree (15, 25, 35, 45) which is static which connects and comprises one or more nodes (10, 20, 30, 40, 50, 60, 70) selected from a set of one or more nodes (10, 20, 30, 40, 50, 60, 70) and configured to provide connections according to the universal distribution tree, wherein the filtering bridge (14) comprises a control unit (103) adapted to receive a data packet associated with a service from a node of the universal distribution tree (15) of a first region (1), to send the data packet to one or more nodes of the universal distribution tree (25) of a second region (2), if the service associated with the data packet is associated with the second region (2), and to drop the data packet, if the service associated with the data packet is not associated with the second region (2) and is not associated with a tunnel to a further filtering bridge or to a single distribution node (33).

## Patentansprüche

1. Verfahren zum Bereitstellen eines Multicast-Kommunikationsdienstes in einem Kommunikationsnetzwerk, welches ein Kernnetzwerk ist, zwei oder mehrere Bereiche (1, 2, 3, 4) umfassend, wobei jeder Bereich (1, 2, 3, 4) einen Satz mit einem oder mehreren Knoten (10, 20, 30, 40, 50, 60, 70) umfasst,
wobei das Verfahren die folgenden Schritte umfasst:
für jeden Bereich (1, 2, 3, 4) der zwei oder mehr Bereiche (1, 2, 3, 4) das Definieren eines universellen, statischen Verteilungsbaums (15, 25, 35, 45), wobei jeder universelle Verteilungsbaum (15, 25, 35, 45) einen oder mehrere Knoten (10, 20, 30, 40, 50, 60, 70) umfasst oder miteinander verbindet, die aus dem Satz mit einem oder mehreren Knoten (10, 20, 30, 40, 50, 60, 70) ausgewählt wurden, der mit seinem Bereich (1, 2, 3, 4) assoziiert ist,
das Konfigurieren des ausgewählten oder mehrerer Knoten (10, 20, 30, 40, 50, 60, 70) für jeden universellen Verteilungsbaum (15, 25, 35, 45), um Verbindungen gemäß dem betreffenden universalen Verteilungsbaum zur Verfügung zu stellen, und
das Konfigurieren mindestens einer Filterbrücke (14, 24) zum Verbinden der zwei oder mehr Verteilungsbäume (15, 25, 35, 45).

2. Verfahren zum Bereitstellen eines Multicast-Kommunikationsdienstes in einem Kommunikationsnetzwerk nach Anspruch 1,
wobei das Verfahren weiterhin die folgenden Schritte umfasst:
den Empfang eines Datenpakets, das mit einem Dienst eines Knotens eines universellen Verteilungsbaums (15) eines ersten Bereichs (1) assoziiert ist, durch mindestens eine Filterbrücke (14),
das durch die mindestens eine Filterbrücke (14) erfolgende Senden des Datenpakets an einen oder mehrere Knoten eines universellen Verteilungsbaums (25) eines zweiten Bereichs (2), wenn der mit dem Datenpaket assoziierte Dienst mit dem zweiten Bereich (2) assoziiert ist, und
das Verwerfen des Datenpakets, wenn der mit dem Datenpaket assoziierte Dienst weder mit dem zweiten Bereich (2) noch mit einem Tunnel zu einer weiteren Filterbrücke oder einem Tunnel zu einem einzelnen Verteilungsknoten assoziiert ist.

3. Verfahren zum Bereitstellen eines Multicast-Kommunikationsdienstes in einem Kommunikationsnetzwerk nach Anspruch 2,
wobei das Verfahren die folgenden Schritte umfasst:
das Bereitstellen einer Filtertabelle für mindestens eine Filterbrücke (14), wobei die Filtertabelle dem ersten Bereich (1) einen oder mehrere Dienste und/oder dem zweiten Bereich (2) einen oder mehrere Dienste zuweist,
das durch die mindestens eine Filterbrücke (14) erfolgende Zugreifen auf die Filtertabelle, und
das Bestimmen anhand der Filtertabelle, ob der mit dem empfangenen Datenpaket assoziierte Dienst mit dem zweiten Bereich (2) assoziiert ist.

4. Verfahren zum Bereitstellen eines Multicast-Kommunikationsdienstes in einem Kommunikationsnetzwerk nach Anspruch 1,
wobei das Verfahren weiterhin die folgenden Schritte umfasst:
den Empfang eines Datenpakets über einen Eingang der mindestens einen Filterbrücke (14), wobei der Eingang der mindestens einen Filterbrücke (14) genau einem Ausgang eines Knotens des universellen Verteilungsbaums (15) zugeordnet ist, der mit einem ersten Bereich (1) assoziiert ist, und
das Senden des Datenpakets an einen oder mehrere Knoten (30), der oder die über einen universellen Verteilungsbaum (25) mit einem weiteren Bereich (3) assoziiert ist/sind, wobei der Verteilungsbaum (25) mit einem zweiten Bereich (2) assoziiert ist, wobei das Datenpaket über einen Ausgang oder mehrere Ausgänge der Filterbrücke (14) gesendet wird, wobei der eine Ausgang oder die mehreren Ausgänge der Filterbrücke (14) einem Eingang des einen Knotens oder der mehreren Knoten des universellen Verteilungsbaums (25) zugewiesen ist/sind, der mit dem zweiten Bereich (2) assoziiert ist.

5. Verfahren zum Bereitstellen eines Multicast-Kommunikationsdienstes in einem Kommunikationsnetzwerk nach Anspruch 1,
wobei das Verfahren die folgenden Schritte umfasst:
das Empfangen eines mit einem Dienst assoziierten Datenpakets durch einen Quellknoten (12), der einer der Knoten der universellen Verteilungsbäume ist, und
das Bereitstellen des mit dem Dienst assoziierten Datenpakets durch einen Verteilungsknoten (33), der einer der Knoten der universellen Verteilungsbäume ist, für eine Vielzahl von Benutzern.

6. Verfahren zum Bereitstellen eines Multicast-Kommunikationsdienstes in einem Kommunikationsnetzwerk nach Anspruch 1,
wobei der Schritt des Konfigurierens der Knoten (10, 20, 30, 40, 50, 60, 70) eines universellen Verteilungsbaums (45) folgenden Schritt umfasst:
das Zuordnen des Ausgangs oder der mehreren Ausgänge (602) des ausgewählten Knotens (60) oder der mehreren ausgewählten Knoten (10, 20, 30, 40, 50, 60, 70) mit einem Eingang (501, 701) eines anderen Knotens (50, 70) aus den Sätzen aus einem oder mehrere Knoten (10, 20, 30, 40, 50, 60, 70), wobei jeder Eingang des einen Eingangs oder der mehreren Eingänge (501, 701) einem Ausgang (602) zugeordnet ist.

7. Verfahren für das Multicasten von Daten nach Anspruch 6,
wobei der Schritt des Konfigurierens der Knoten (10, 20, 30, 40, 50, 60, 70) eines universellen Verteilungsbaums (45) folgenden weiteren Schritt umfasst:
das Zuweisen von zwei oder mehr Ausgängen des Knotens (60) an entsprechende Eingänge (501, 701) des anderen Knotens.

8. Verfahren zum Bereitstellen eines Multicast-Kommunikationsdienstes in einem Kommunikationsnetzwerk nach Anspruch 1,
wobei das Verfahren folgenden Schritt umfasst:
das durch einen Quellknoten (12) aus dem Kreis der Knoten der universellen Verteilungsbäume erfolgende Kennzeichnen eines Datenpakets mit einem Label, welches indiziert, dass das Datenpaket mit einem Dienst assoziiert ist.

9. Verfahren zum Bereitstellen eines Multicast-Kommunikationsdienstes in einem Kommunikationsnetzwerk nach Anspruch 8,
wobei das Verfahren die folgenden Schritte umfasst:
den Empfang des Datenpakets mit dem Label eines Knotens eines universellen Verteilungsbaums (15) eines ersten Bereichs (1) durch mindestens eine Filterbrücke (14),
das Bestimmen anhand des Labels, ob der mit dem empfangenen Datenpaket assoziierte Dienst mit einem zweiten Bereich (2) assoziiert ist.
das durch die mindestens eine Filterbrücke (14) erfolgende Senden des Datenpakets an einen oder mehrere Knoten eines universellen Verteilungsbaums (25) des zweiten Bereichs (2), wenn der mit dem Datenpaket assoziierte Dienst mit dem zweiten Bereich (2) assoziiert ist, und
das Verwerfen des Datenpakets, wenn der mit dem Datenpaket assoziierte Dienst weder mit dem zweiten Bereich (2) noch mit einem Tunnel zu einer entfernten Filterbrücke oder zu einem entfernten Verteilungsknoten assoziiert ist.

10. Verfahren zum Bereitstellen eines Multicast-Kommunikationsdienstes in einem Kommunikationsnetzwerk nach Anspruch 8,
wobei das Verfahren die folgenden Schritte umfasst:
das durch einen Verteilungsknoten (33) aus dem Kreis der Knoten der universellen Verteilungsbäume erfolgende Entfernen desjenigen Labels von dem Datenpaket, welches indiziert, dass das Datenpaket mit dem Dienst assoziiert ist.

11. Kommunikationsnetzwerk zum Bereitstellen eines Multicast-Kommunikationsdienstes, welches ein Kernnetzwerk ist, zwei oder mehrere Bereiche (1, 2, 3, 4) umfassend, wobei jeder Bereich (1, 2, 3, 4) einen Satz mit einem oder mehreren Knoten (10, 20, 30, 40, 50, 60, 70) umfasst, wobei jeder Bereich (1, 2, 3, 4) der zwei oder mehr Bereiche (1, 2, 3, 4) einen vordefinierten, universellen und statischen Verteilungsbaum (15, 25, 35, 45) umfasst, welcher einen oder mehrere Knoten (10, 20, 30, 40, 50, 60, 70) umfasst oder miteinander verbindet, die aus dem Satz mit einem oder mehreren Knoten (10, 20, 30, 40, 50, 60, 70) ausgewählt wurden, wobei der eine oder die mehreren Knoten (10, 20, 30, 40, 50, 60, 70) konfiguriert sind, um Verbindungen gemäß dem universellen Verteilungsbaum zur Verfügung zu stellen, und wobei das Kommunikationsnetzwerk mindestens eine Filterbrücke (14, 24) umfasst, die dafür konfiguriert ist, um die zwei oder mehr universellen Verteilungsbäume (15, 25, 35, 45) miteinander zu verbinden.

12. Das Kommunikationsnetzwerk nach Anspruch 11,
wobei das Kommunikationsnetzwerk eine Netzwerkverwaltungs-Steuereinheit (11) umfasst, die mit mindestens einem Bereich der zwei oder mehr Bereiche (1, 2, 3, 4) assoziiert ist, und wobei die Netzwerkverwaltungs-Steuereinheit (11) dafür ausgelegt ist, um anhand einer grafischen Benutzerschnittstelle (112) Zugang zu gewähren, um den Satz mit einem oder mehreren Knoten (10, 20, 30, 40, 50, 60, 70) zu konfigurieren und zu verwalten und/oder um den mindestens einen, vordefinierten und universellen Verteilungsbaum (15, 25, 35, 45) zu definieren.

13. Filterbrücke (14) zum Bereitstellen eines Multicast-Kommunikationsdienstes in einem Kommunikationsnetzwerk, welches ein Kernnetzwerk ist, zwei oder mehrere Bereiche (1, 2, 3, 4) umfassend, wobei jeder Bereich (1, 2, 3, 4) einen vordefinierten, universellen und statischen Verteilungsbaum (15, 25, 35, 45) umfasst, welcher einen oder mehrere Knoten (10, 20, 30, 40, 50, 60, 70) umfasst oder miteinander verbindet, die aus dem Satz mit einem oder mehreren Knoten (10, 20, 30, 40, 50, 60, 70) ausgewählt wurden und dafür konfiguriert sind, um Verbindungen gemäß dem universellen Verteilungsbaum zur Verfügung zu stellen, wobei die Filterbrücke (14) eine Steuereinheit (103) umfasst, die dafür ausgelegt ist, um ein Datenpaket zu empfangen, das mit einem Dienst von einem Knoten des universellen Verteilungsbaums (15) eines ersten Bereichs (1) assoziiert ist, um das Datenpaket dann an einen oder mehrere Knoten des universellen Verteilungsbaums (25) des zweiten Bereichs (2) zu senden, wenn der mit dem Datenpaket assoziierte Dienst mit dem zweiten Bereich (2) assoziiert ist, oder um das Datenpaket dann zu verwerfen, wenn der mit dem Datenpaket assoziierte Dienst weder mit dem zweiten Bereich (2) noch mit einem Tunnel zu einer weiteren Filterbrücke oder zu einem einzelnen Verteilungsknoten (33) assoziiert ist.

## Revendications

1. Procédé de fourniture d'un service de communication multidiffusion dans un réseau de communication, qui est un réseau coeur, comprenant deux régions ou plus (1, 2, 3, 4), chaque région (1, 2, 3, 4) comprenant un ensemble d'un ou plusieurs noeuds (10, 20, 30, 40, 50, 60, 70),
le procédé comprenant les étapes suivantes :
définir pour chaque région (1, 2, 3, 4) des deux régions ou plus (1, 2, 3, 4) un arbre de distribution universel (15, 25, 35, 45), qui est statique, chaque arbre de distribution universel (15, 25, 35, 45) connectant et comprenant un ou plusieurs noeuds (10, 20, 30, 40, 50, 60, 70) sélectionnés parmi l'ensemble d'un ou plusieurs noeuds (10, 20, 30, 40, 50, 60, 70) associés à sa région (1, 2, 3 4,),
configurer pour chaque arbre de distribution universel (15, 25, 35, 45) les un ou plusieurs noeuds sélectionnés (10, 20, 30, 40, 50, 60, 70) pour fournir des connexions selon l'arbre de distribution universel respectif, et
configurer au moins un pont filtrant (14, 24) pour interconnecter les deux arbres de distribution universels ou plus (15, 25, 35, 45).

2. Procédé de fourniture d'un service de communication multidiffusion dans un réseau de communication selon la revendication 1,
le procédé comprenant les étapes supplémentaires suivantes :
recevoir, par le au moins un pont filtrant (14), un paquet de données associé à un service en provenance d'un noeud d'un arbre de distribution universel (15) d'une première région (1),
envoyer, par le au moins un pont filtrant (14), le paquet de données à un ou plusieurs noeuds d'un arbre de distribution universel (25) d'une seconde région (2), si le service associé au paquet de données est associé à la seconde région (2), et
éliminer le paquet de données, si le service associé au paquet de données n'est pas associé à la seconde région (2) et n'est pas associé à un tunnel vers un pont filtrant supplémentaire ou un tunnel vers un seul noeud de distribution.

3. Procédé de fourniture d'un service de communication multidiffusion dans un réseau de communication selon la revendication 2,
le procédé comprenant les étapes suivantes :
fournir une table de filtre au au moins un pont filtrant (14), la table de filtre assignant un ou plusieurs services à la première région (1) et/ou un ou plusieurs services à la seconde région (2),
accéder, par le au moins un pont filtrant (14), à la table de filtre, et
déterminer au moyen de la table de filtre si le service associé au paquet de données reçu est associé à la seconde région (2).

4. Procédé de fourniture d'un service de communication multidiffusion dans un réseau de communication selon la revendication 1,
le procédé comprenant les étapes supplémentaires suivantes :
recevoir un paquet de données via un port d'entrée du au moins un pont filtrant (14), le port d'entrée du au moins un pont filtrant (14) étant assigné à exactement un port de sortie d'un noeud de l'arbre de distribution universel (15) associé à une première région (1), et
envoyer le paquet de données à un ou plusieurs noeuds (30) associés à une autre région (3) via un arbre de distribution universel (25) associé à une seconde région (2), moyennant quoi le paquet de données est envoyé via un ou plusieurs ports de sortie du pont filtrant (14), chacun des un ou plusieurs ports de sortie du pont filtrant (14) étant assigné à un port d'entrée d'un des un ou plusieurs noeuds de l'arbre de distribution universel (25) associé à la seconde région (2).

5. Procédé de fourniture d'un service de communication multidiffusion dans un réseau de communication selon la revendication 1,
le procédé comprenant les étapes suivantes :
recevoir, par un noeud source (12) qui est un des noeuds des arbres de distribution universels, un paquet de données associé à un service, et
fournir, par un noeud de distribution (33) qui est un des noeuds des arbres de distribution universels, le paquet de données associé au service à une pluralité d'utilisateurs.

6. Procédé de fourniture d'un service de communication multidiffusion dans un réseau de communication selon la revendication 1,
dans lequel l'étape de configuration des noeuds (10, 20, 30, 40, 50, 60, 70) d'un arbre de distribution universel (45) comprend l'étape suivante :
assigner chacun d'un ou plusieurs ports de sortie (602) d'un noeud (60) des un ou plusieurs noeuds sélectionnés (10, 20, 30, 40, 50, 60, 70) à un port d'entrée (501, 701) d'un autre noeud (50, 70) des ensembles d'un ou plusieurs noeuds (10, 20, 30, 40, 50, 60, 70), chaque port d'entrée des un ou plusieurs ports d'entrée (501, 701) étant assigné à un port de sortie (602).

7. Procédé de multidiffusion de données selon la revendication 6,
dans lequel l'étape de configuration des noeuds (10, 20, 30, 40, 50, 60, 70) d'un arbre de distribution universel (45) comprend l'étape supplémentaire suivante :
assigner deux ports de sortie ou plus du noeud (60) à des ports d'entrée respectifs (501, 701) de l'autre noeud.

8. Procédé de fourniture d'un service de communication multidiffusion dans un réseau de communication selon la revendication 1,
le procédé comprenant l'étape suivante :
étiqueter, par un noeud source (12) qui est un des noeuds des arbres de distribution universels, un paquet de données avec une étiquette indiquant que le paquet de données est associé à un service.

9. Procédé de fourniture d'un service de communication multidiffusion dans un réseau de communication selon la revendication 8,
le procédé comprenant les étapes suivantes :
recevoir, par le au moins un pont filtrant (14), le paquet de données avec l'étiquette en provenance d'un noeud d'un arbre de distribution universel (15) d'une première région (1),
déterminer au moyen de l'étiquette si le service associé au paquet de données reçu est associé à une seconde région (2),
envoyer, par le au moins un pont filtrant (14), le paquet de données à un ou plusieurs noeuds d'un arbre de distribution universel (25) de la seconde région (2), si le service associé au paquet de données est associé à la seconde région (2), et
éliminer le paquet de données, si le service associé au paquet de données n'est pas associé à la seconde région (2) et n'est pas associé à un tunnel vers un pont filtrant distant ou un noeud de distribution distant.

10. Procédé de fourniture d'un service de communication multidiffusion dans un réseau de communication selon la revendication 8,
le procédé comprenant l'étape suivante :
supprimer, par un noeud de distribution (33) qui est un des noeuds des arbres de distribution universels, du paquet de données l'étiquette indiquant que le paquet de données est associé au service.

11. Réseau de communication pour fournir un service de communication multidiffusion, le réseau de communication, qui est un réseau coeur, comprenant deux régions ou plus (1, 2, 3, 4), chaque région (1, 2, 3, 4) comprenant un ensemble d'un ou plusieurs noeuds (10, 20, 30, 40, 50, 60, 70), chaque région (1, 2, 3, 4) des deux régions ou plus (1, 2, 3, 4) comprenant un arbre de distribution universel prédéfini (15, 25, 35, 45), qui est statique, qui connecte et comprend un ou plusieurs noeuds (10, 20, 30, 40, 50, 60, 70) sélectionnés parmi l'ensemble d'un ou plusieurs noeuds (10, 20, 30, 40, 50, 60, 70), moyennant quoi les un ou plusieurs noeuds (10, 20, 30, 40, 50, 60, 70) sont configurés pour fournir des connexions selon l'arbre de distribution universel, et le réseau de communication comprenant au moins un pont filtrant (14, 24) configuré pour interconnecter les deux arbres de distribution universels ou plus (15, 25, 35, 45).

12. Réseau de communication selon la revendication 11,
le réseau de communication comprenant une unité de contrôle de gestion de réseau (11) associée à au moins une région des deux régions ou plus (1, 2, 3, 4), et l'unité de contrôle de gestion de réseau (11) étant adaptée pour fournir un accès au moyen d'une interface utilisateur graphique (112), pour configurer et pour gérer l'ensemble d'un ou plusieurs noeuds (10, 20, 30, 40, 50, 60, 70) et/ou pour définir le au moins un arbre de distribution universel prédéfini (15, 25, 35, 45).

13. Pont filtrant (14) pour fournir un service de communication multidiffusion dans un réseau de communication, qui est un réseau coeur, comprenant deux régions ou plus (1, 2, 3, 4), chaque région (1, 2, 3, 4) comprend un arbre de distribution universel prédéfini (15, 25, 35, 45), qui est statique, qui connecte et comprend un ou plusieurs noeuds (10, 20, 30, 40, 50, 60, 70) sélectionnés parmi un ensemble d'un ou plusieurs noeuds (10, 20, 30, 40, 50, 60, 70) et configuré pour fournir des connexions selon l'arbre de distribution universel, le pont filtrant (14) comprenant une unité de contrôle (103) adaptée pour recevoir un paquet de données associé à un service en provenance d'un noeud de l'arbre de distribution universel (15) d'une première région (1), pour envoyer le paquet de données à un ou plusieurs noeuds de l'arbre de distribution universel (25) d'une seconde région (2), si le service associé au paquet de données est associé à la seconde région (2), et pour éliminer le paquet de données, si le service associé au paquet de données n'est pas associé à la seconde région (2) et n'est pas associé à un tunnel vers un pont filtrant supplémentaire ou vers un seul noeud de distribution (33).
